Europäisches Patentamt

European Patent Office

Office européen des brevets

(11) Publication number: **0 137 814**
**B1**

(12) EUROPEAN PATENT SPECIFICATION

(45) Date of publication of patent specification: **13.01.88**

(51) Int. Cl.⁴: **A 01 D 34/63,** A 01 D 34/68

(21) Application number: **84900951.9**

(22) Date of filing: **06.03.84**

(86) International application number:
**PCT/AU84/00035**

(87) International publication number:
**WO 84/03413 13.09.84 Gazette 84/22**

(54) ROTARY LAWNMOWER.

(30) Priority: **11.03.83 AU 8404/83**

(43) Date of publication of application:
**24.04.85 Bulletin 85/17**

(45) Publication of the grant of the patent:
**13.01.88 Bulletin 88/02**

(84) Designated Contracting States:
**DE FR GB**

(56) References cited:
**WO-A-82/01115**
**FR-A-2 235 639**
**US-A-3 222 853**
**US-A-3 664 097**
**US-A-3 846 963**

(73) Proprietor: **SUNBEAM CORPORATION LIMITED**
**Wade Street**
**Campsie, NSW 2194 (AU)**

(72) Inventor: **MEYER, Dolph, Allan**
**Wade Street**
**Campsie, NSW 2194 (AU)**

(74) Representative: **Pratt, David Martin et al**
**Brookes & Martin High Holborn House**
**52/54 High Holborn**
**London. WC1V 6SE (GB)**

Courier Press, Leamington Spa, England.

## Description

This invention relates to rotary type lawnmowers, and more especially to those machines which gather and store the waste grass cuttings.

Two major problems arise in the collection and disposal of these grass cuttings. Firstly, contemporary grass catchers are bulky containers carried upon a lawnmower and due to the necessary limitations on their size frequent cessation of a mowing operation occurs while a container is emptied. Secondly, the bulk of the waste and its non-flammability presents difficulties in its disposal.

It has been found that waste grass cuttings are capable of being compacted into a volume only a fraction of their original bulk. Attempts have previously been made to utilize a compacting auger to compress grass cuttings into a container for disposal. Such an auger has been proposed by U.S. Patent Specification No. 3 736 736 as an accessory for inclusion on a lawn or garden tractor. It is attached to one side of the tractor and is driven by power take-off from the cutter shaft through lengthy and exposed belt drive. Such an arrangement is quite unsuitable for a domestic style rotary lawnmower as it is cumbersome and represents a safety hazard. Furthermore, compression of the grass is achieved by forced packing within the grass container which is undesirable.

Another form of auger attachment is described in U.S. Patent Specification No. 3 846 963 which also suffers from the first two of the above defects. Additionally it achieves compression of the grass by the use of a fixed blade cooperating with a double spiral section of the auger in order to achieve compressed pellets of grass cuttings.

Another known rotary lawnmower having an auger attachment is described in French Patent Specification No. 2 235 639. Compaction of grass is achieved by a restricted passage which joins a helical auger to a grass catcher. The disadvantage of this arrangement is that the compaction of grass cuttings in the restricted passage leads to undue loading of the motor of the lawnmower.

The aim of the invention is to provide a rotary lawnmower suitable for domestic use which has means for catching and storing waste grass cuttings in a compacted condition.

The present invention provides a rotary lawnmower having a base plate, a motor with driving shaft supported on the baseplate, a grass cutting assembly beneath the baseplate and connected with said drive shaft, an auger conveyor upon the base plate driven by said drive shaft and having an inlet end receiving grass cuttings from said grass cutting assembly, and a removable grass catcher receiving compacted grass cuttings from said auger conveyor and storing same in a compacted condition, the lawnmower having a passage between the outlet of said auger conveyor and said grass catcher, characterised in that the axis of said passage is bent out of alignment with the axis of said auger conveyor to effect compaction of the grass cuttings as they change direction within said passage before passing into said grass catcher.

The invention will be better understood from a reading of the following description with reference to the accompanying drawings, in which:

Fig. 1 is a side elevation of a rotary lawnmower mounting one form of grass catcher;

Fig. 2 is a plan view thereof;

Fig. 3 is a side elevation of the same lawnmower mounting a different form of grass catcher;

Fig. 4 is a fragmentary sectional view of the compacting means employed; and

Fig. 5 is a fragmentary plan view of the auger selective drive.

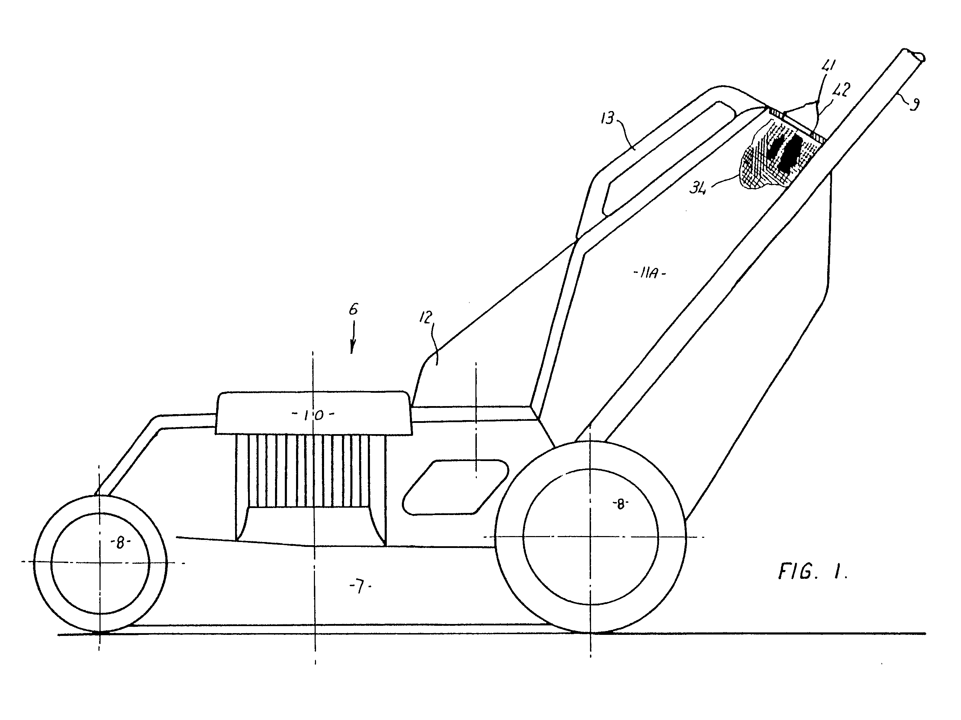

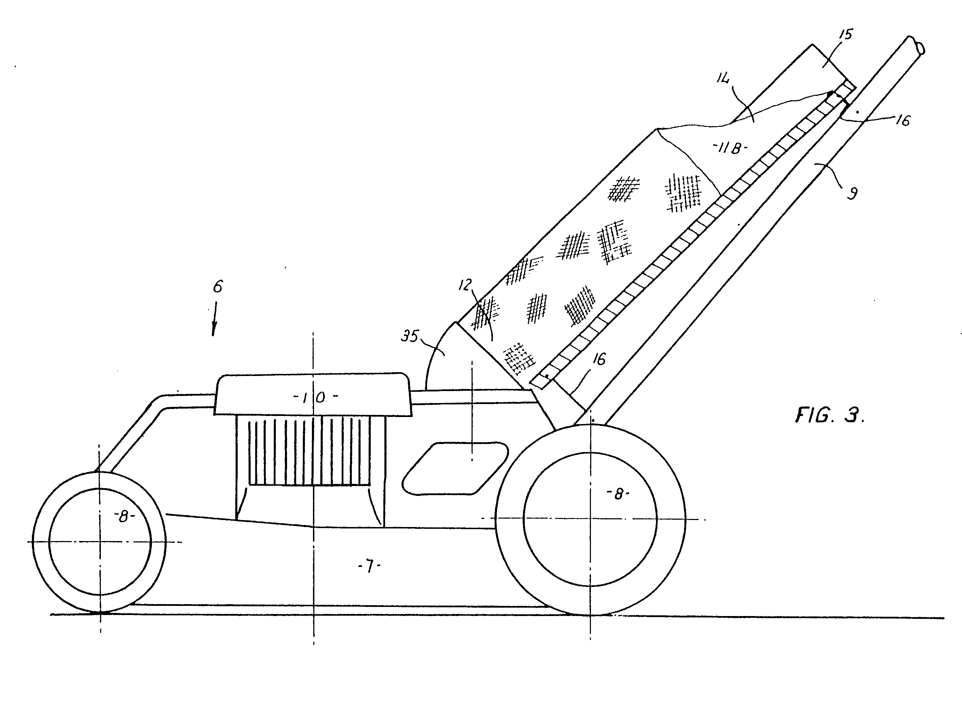

With reference to Figs. 1, 2 and 3, it will be noted that a rotary lawnmower 6 consists of a baseplate 7 rendered mobile by wheels 8 and under the control of a handle 9. An internal combustion, or electric, motor 10 is centrally mounted upon the baseplate 7 and a grass catcher 11A (of solid form) or 11B (of flexible form) is supported in position between the arms of the handle 9 with its entry portion 12 overlying the baseplate 7. The grass catcher 11A may be provided with a carrying handle 13. The grass catcher 11A is preferably formed of thermoplastic material and of permanent shape, and in use is removed from the baseplate 7 and returned thereto after disposal of its contents of grass cuttings. In the case of the grass catcher 11B, shown in Fig. 3, it is preferably formed of flexible material, such as polythene and in the form of a sock or tube closed at its outer end 14. The flexible bag type grass catcher 11B is supported within a channelled member 15 mounted at its opposite ends by leg members 16 between the arms of the handle 9. The flexible container 11B progressively assumes a solid form throughout its length as filling thereof progresses.

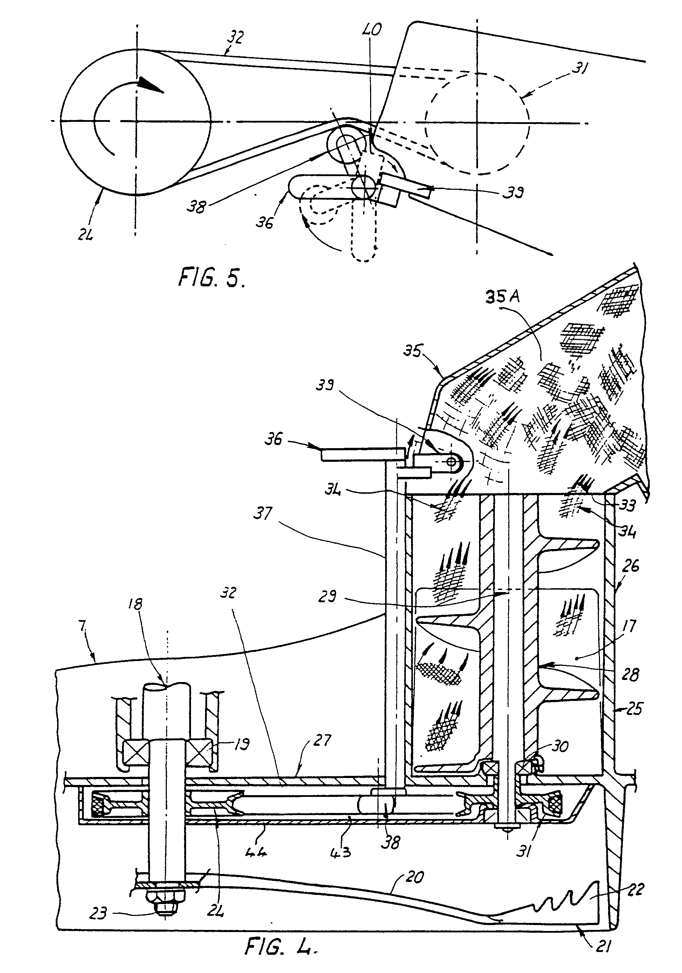

Preferably the baseplate 7 is of convoluted form as represented by the fragmentary view of Fig. 4. A grass discharge opening 17 is provided at the end of the convolution in the baseplate 7. The motor 10 has a vertical downwardly extending drive shaft 18 journalled near its lower end in a bearing 19 and terminating in a grass cutting assembly 20, composed of either one or more cutter bars, or a cutting disc mounting pivotable cutting blades. A cutter bar is shown provided with a cutting portion 21 at its outer end provided with a notched impacting, trailing flange 22. Short of its outer end 23 the shaft 18 carries a pulley 24.

It will be noted that a vertically mounted auger conveyor 25 has its outer tubular housing 26 integrally formed with a platform 27 which may be provided in the casing of the baseplate 7. The platform 27 is positioned below the upper surface of the baseplate 7 which is provided with an opening through which the conveyor housing 26 protrudes. An auger screw 28, rotatable within the housing 26 is mounted upon an axial shaft 29 journalled in a bearing 30 and terminating at its lower end in a pulley wheel 31. A V-belt 32 is reeved over the two pulleys 24 and 31 in order to provide driving power from the shaft 18 to the augur 28. The belt 32 and pulleys 24 and 31 are enclosed within a clean-air compartment 43 by a partition 44. Thus, when the auger 28 is rotated in a clockwise direction as viewed in Fig. 4, grass cuttings exiting through the discharge opening 17 will be carried by the blades of the auger 28 through the open top 33 of the housing 26 for discharge into a grass catcher 11A or 11B.

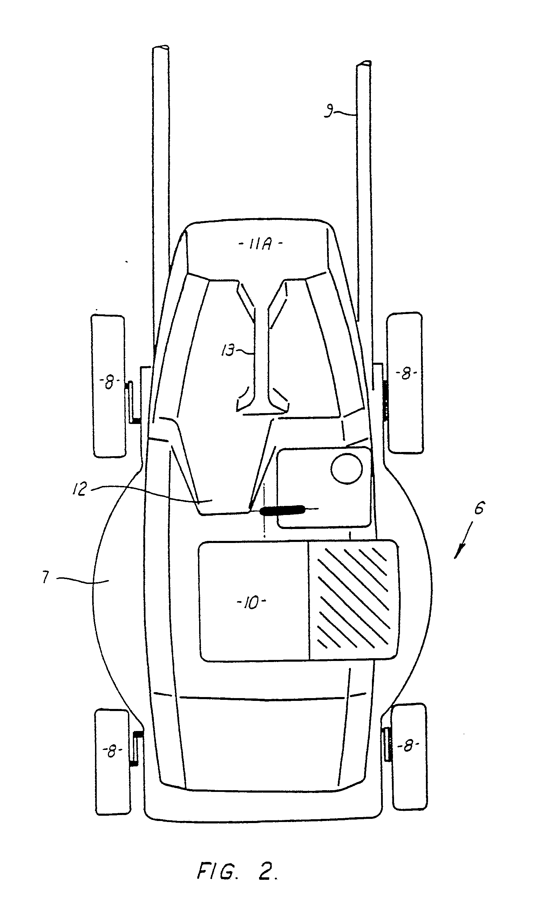

Restriction to the passage of grass cuttings 34 may be provided within the auger conveyor 25, for example by providing a converging housing 26 towards its upper end 33. Preferably, however, such restriction is provided by a restricting elbow 35 which may be incorporated on the baseplate 7 or on the grass catcher 11A, of Fig. 2, or may be a separable unit attachable to the flexible grass catcher 11B, of Fig. 3. Compaction of the grass cuttings 34 occurs due to an internal angular passage 35A provided within the elbow 35. Additionally, the internal passage 35A may be constricted in cross-section either at a single location or throughout. Preferably, cross-sectional constriction occurs progressively along the passage. In either event grass cuttings 34 can be compacted to approximately 1/12th their normal volume through being forced by the auger 28 through the elbow 35. It has been found that having once been compacted the grass cuttings 34 remain substantially in that condition even when discharged into either the catcher 11A or 11B. Thus, it will be seen that the catcher 11A or 11B is not itself subjected to excessive internal pressure under normal conditions as compression of the grass occurs before entry to the catcher. Due to their greatly reduced volume the grass cuttings 34 may be more readily disposed of as refuse. In the case of the catcher 11B, it is feasible that such a sock filled with compacted grass cuttings may be discarded, together with its contents, into a garbage tin.

It is preferred that drive to the auger screw 28 be removed when a grass catcher 11A or 11B is removed from the baseplate 7. To this end, a lever handle 36, to be manipulated by an operator or automatically upon removal of the catcher, is fixed upon a vertical shaft 37 which carries a roller 38 at its lower end engageable with the V-belt 32 in order to control the tension therein (see Figs. 4 and 5). The lever 36 is in the position shown in heavy outline in Fig. 5 when the elbow 35 is in position over the end 33 of the auger housing 26 and is locked in that position by a pawl 39 carried on the elbow 36 which latches the extension lug 40 on the shaft 37. Therefore, when the elbow 35 is withdrawn the lever 36 and shaft 37 are free to rotate to the chain dotted position shown in Fig. 5 where the roller 38 ceases to exert tension on the V-belt 32 so that drive from the motor shaft 18 is disconnected from the auger shaft 29.

As a refinement there may be provided a pressure indicator 41 (Fig. 1) which is pivoted to the catcher 11A to protrude progressively therefrom as internal pressure increases as the catcher becomes fully loaded. A red coloured area 42 may be exposed to the operator's view when emptying of the catcher is required.

**Claims**

1. A rotary lawnmower having a baseplate (7), a motor (10) with driving shaft (18) supported on the baseplate, a grass cutting assembly (20) beneath the baseplate and connected with said drive shaft, an auger conveyor (28) upon the baseplate driven by said drive shaft and having and inlet end receiving grass cuttings from said grass cutting assembly, and a removable grass catcher (11A or 11B) receiving compacted grass cuttings from said auger conveyor and storing same in a compacted condition, the lawnmower having a passage (35A) between the outlet (33) of said auger conveyor and said grass catcher, characterised in that the axis of said passage is bent out of alignment with the axis of said auger conveyor to effect compaction of the grass cuttings (34) as they change direction within said passage before passing into said grass catcher.

2. A rotary lawnmower as claimed in claim 1, wherein said passage is provided in a detachable elbow (35) and is unconstricted in transverse cross-section throughout.

3. A rotary lawnmower as claimed in claim 1 or claim 2, wherein the axes of said auger conveyor and said drive shaft are substantially parallel and drive to said auger conveyor is derived from a belt (32) reeled over a pulley (24) mounted upon said drive shaft with said belt and said pulley being housed within an enclosed compartment (43) beneath the baseplate.

4. A rotary lawnmower as claimed in claim 3, wherein said drive to said auger conveyor is removable through release of a tensioning device (36, 37, 38) for said belt.

5. A rotary lawnmower as claimed in claim 4, further comprising a lever (36) for effecting said release of the tensioning device, said lever being locked to prevent said release by engagement with part of said elbow and being freed from for said lease with removal of said elbow.

6. A rotary lawnmower as claimed in claim 1, wherein said auger conveyor has a tubular housing (26) enclosing an auger screw (28) and is disposed on a substantially vertical axis and receives said grass cuttings through an aperture (17) in an open end of its housing to convey said grass cuttings upwardly towards an entrance to said grass catcher.

7. A rotary lawnmower as claimed in claim 1, wherein said passage is at least partly constricted in cross-section.

8. A rotary lawnmower as claimed in claim 7, wherein said constriction occurs progressively along said passage through the elbow.

**Patentansprüche**

1. Rasenmäher mit drehbarem Messerwerk, mit einer Grundplatte (7), einem auf der Grundplatte abgestützten, eine Antriebswelle (18) aufweisenden Motor (10), sowie mit einer unter der Grundplatte angeordneten, mit der Antriebswelle verbundenen Grasschneidevorrichtung (20), und mit einem auf der Grundplatte angeordneten, von der Antriebswelle angetriebenen Schneckenförderer (28) der an einem Ende einen Einlaß zur Aufnahme des von der Grasschneidevorrichtung geschnittenen Halmguts aufweist, sowie mit einer abnehmbaren Grasauffangsvorrichtung (11A oder 11B) zur Aufnahme des von dem Schneckenförderer zugeführten, kompaktierten Halmguts und zur Aufbewahrung desselben in kompaktierter Form, wobei der Rasenmäher zwischen dem Austritt (33) des Schneckkenförderers und der Grasauffangvorrichtung einen Durchtrittsbereich (35A) für das Halmgut aufweist, dadurch gekennzeichnet, daß die Achse des Durchtrittsbereichs gegenüber der Achse des Schneckenförderers abgebogen ist, damit das Halmgut (34) bei seinem Richtungswechsel innerhalb des Durchtrittsbereichs eine Kompaktierung erfährt bevor es in die Grasauffangvorrichtung gelangt.

2. Rasenmäher nach Anspruch 1, in dem der Durchtrittsbereich sich in einem abnehmbaren Kniestück (35) befindet, wobei sich der Querschnitt des Durchtrittsbereichs in Querrichtung nicht verengt.

3. Rasenmäher nach Anspruch 1 oder 2, in dem die Achsen des Schneckenförderers und der Antriebswelle im wesentlichen parallel zueinander verlaufen und der Antrieb zum Schneckenförderer mittels eines Riemens (32) erfolgt, der über eine auf der Antriebswelle befestigte Riemenscheibe (24) geführt ist, wobei der Riemen und die Riehmenscheibe in einem geschlossenen Gehäuse (43) unterhalb der Grundplatte angeordnet sind.

4. Rasenmäher nach Anspruch 3, in dem der Antrieb zu dem Schneckenförderer durch Ausrükken einer Spannvorrichtung (36, 37, 38) für den Riemen unterbrechbar ist.

5. Rasenmäher nach Anspruch 4, der des weiteren einen Hebel (36) zum Bewerkstelligen dieses Ausrückens der Spannvorrichtung aufweist, wobei zur Vermeidung dieses Ausrückens der Hebel durch Eingriff mit einem Teil des Kniestücks verriegelt ist und der Hebel mit der Entfernung des Kniestücks zum Ausrücken der Spannvorrichtung gelöst wird.

6. Rasenmäher nach Anspruch 1, in dem der Schneckenförderer, dessen Achse im wesentlichen vertikal verläuft, ein röhrenförmiges Gehäuse (26) aufweist, das eine Förderschnecke (28) umschließt, und das Halmgut, das durch eine sich an einem offenen Ende seines Gehäuses befindliche Öffnung (17) eintritt, nach oben in Richtung auf eine Einlaßöffnung der Grasauffangvorrichtung befördert.

7. Der Rasenmäher nach Anspruch 1, in dem der Querschnitt des Durchtrittbereichs zumindest teilweise verengt ist.

8. Der Rasenmäher nach Anspruch 7, in dem diese Querschnittsverengung längs des Durchtrittbereichs durch das Kniestück progressiv verläuft.

## Revendications

1. Tondeuse à gazon rotative comportant un châssis (7), um moteur (10) ayant un arbre d'entraînement (18) porté sur le châssis, un ensemble (20) de coupe d'herbe au-dessous du châssis et relié audit arbre d'entraînement, un transporteur à vis (28) monté sur le châssis, entraîné par ledit arbre entraînement et comportant une extrémité d'entrée recevant des herbes coupées en provenance dudit ensemble de coupe d'herbe, et un récepteur d'herbes (11A, ou 11B) amovible recevant des herbes coupées compactées en provenance dudit transporteur à vis et emmagasinant celles-ci à l'état compacté, la tondeuse comportant un passage (35A) entre la sortie (33) dudit transporteur à vis et ledit récepteur d'herbes, caractérisée en ce que l'axe dudit passage est incurvé hors d'alignement avec l'axe dudit transporteur à vis pour effectuer le compactage des herbes coupées (34) lorsqu'elles changent de direction à l'intérieur dudit passage avant de passer dans ledit récepteur d'herbes.

2. Tondeuse rotative suivant la revendication 1, dans laquelle ledit passage est réalisé dans coude amovible (35) et n'est pas étranglé en section transversale sur toute son étendue.

3. Tondeuse à gazon rotative suivant la revendication 1 ou 2, dans laquelle les axes dudit transporteur à vis et dudit arbre d'entraînement sont à peu près parallèles, l'entraînement dudit transporteur à vis étant dérivé par une courroie (32) passant sur une poulie (24) montée sur ledit arbre d'entraînement, ladite courroie et ladite poulie étant enfermées dans un compartiment fermé (43) au-dessous du châssis.

4. Tondeuse à gazon rotative suivant la revendication 3, dans laquelle ledit entraînement du transporteur à vis peut être coupé par la détente d'un dispositif (36, 37, 38) de tension de ladite courroie.

5. Tondeuse à gazon rotative suivant la revendication 4, comprenant en outre un levier (36) pour effectuer ladite détente du dispositif de tension, ledit levier étant verrouillé pour empêcher ladite détente par entrée en contact avec une partie dudit coude, et étant libéré pour ladite détente, par l'enlèvement dudit coude.

6. Tondeuse à gazon rotative suivant la revendication 1, dans laquelle ledit transporteur à vis comporte un carter tubulaire (26) enfermant une vis transporteuse (28), est disposé selon un axe à peu près vertical et reçoit lesdites herbes coupées à travers une ouverture (17) à une extrémité ouverte de son carter pour transporter lesdites herbes coupées en montant vers une entrée dans ledit récepteur d'herbes.

7. Tondeuse à gazon rotative suivant la revendication 1, dans laquelle ledit passage est au moins partiellement étranglé en section transversale.

8. Tondeuse à gazon rotative suivant la revendication 7, dans laquelle ledit étranglement est formé progressivement le long dudit passage à travers le coude.

FIG. 1.

FIG. 2.

FIG. 3.

FIG. 5.

FIG. 4.

4